# EUROPÄISCHE PATENTSCHRIFT

(11) **EP 0 541 487 B1**
(45) Veröffentlichungstag und Bekanntmachung des Hinweises auf die Patenterteilung: **03.09.1997**
(21) Anmeldenummer: 92810833.1
(22) Anmeldetag: 28.10.1992
(51) Int. Cl.: E04B 9/18, E04B 1/41, E21F 1/00, F16B 37/04, E04C 5/12

(54) **Vorrichtung für die Verankerung eines auf Zug belasteten Konstruktionselements**
Anchoring device for construction elements under tension
Dispositif d'ancrage pour éléments de construction tendus

(30) Priorität: 05.11.1991 CH 3220/91
(43) Veröffentlichungstag der Anmeldung: 12.05.1993
(73) Patentinhaber: Erb, Toni H., CH-2012 Auvernier (CH)
(72) Erfinder: Erb, Toni H., CH-2012 Auvernier (CH)
(74) Vertreter: Keller, René, Dr.

(56) Entgegenhaltungen:
- WO-A-92/08019
- AT-B- 346 040
- CH-A- 471 287
- FR-A- 2 478 707
- FR-A- 2 579 246
- US-A- 4 084 362

## Beschreibung

### Technisches Gebiet

Die Erfindung bezieht sich auf eine Vorrichtung zum Verankern eines auf Zug belasteten Kontruktionselements, umfassend ein verankerbares, insbesondere einbetonierbares Gehäuse und ein in diesem gelenkartig beweglich gelagertes Aufnahmeteil, in welchem das Konstruktionselement zugfest fixierbar ist.

### Stand der Technik

Insbesondere im Tunnelbau, aber auch bei anderen Anwendungen, bei denen eine Zwischendecke oder eine sonstige Konstruktion an die obere Raumdecke gehängt werden muss, ist es vorteilhaft, wenn die Zugstangen, die die Zwischendecke tragen sollen, im Tunnelgewölbe so fixiert sind, dass sie erst nach dem Ausschalen desselben zu montieren sind. Dabei ergibt sich oft die Situation, dass die Achse ihrer im Tunnelgewölbe einbetonierten oberen Verankerungsvorrichtung nicht genau in der Achse der unteren, in der Zwischendecke vorgesehenen Befestigungsvorrichtung liegt, derart, dass die Zugstangen zwangsläufig verbogen werden müssen, um sie mit den beiden Vorrichtung verbinden zu können. Dies wirkt sich allerdings negativ auf die Zugfestigkeit der Zugstangen und damit die Sicherheit der Zwischendeckenaufhängung als Ganzes aus und erschwert die Montage der Zwischendecke.

Aus der AT 346 040 ist eine Vorrichtung zum Befestigen von abgehängten Decken an einer Deckenkonstruktion bekannt. Eine Kopfschraube ist in ein kugelförmiges, beweglich gelagertes Aufnahmeteil einschraubbar. Das Aufnahmeteil ist unverlierbar im Gehäuse gehalten. Um das Aufnahmeteil beim Einschrauben der Kopfschraube gegen Verdrehen zu sichern, ist an ihm ein eckiger Flansch angeformt. Die bekannte Vorrichtung wird z. B. mittels eines Zwischenstücks aus Holz an der Tragkonstruktion befestigt.

Die kugelgelenkartige Beweglichkeit des Aufnahmeteils erlaubt eine zuverlässige Befestigung von plattenförmigen Teilen auch dann, wenn sich die Befestigungslöcher der plattenförmigen Teile und die Befestigungsorgane an der Decke nicht exakt gegenüber stehen.

Aus der US-PS 3,640,328 ist eine gattungsgemäss andere Verankerungsvorrichtung bekannt. Sie eignet sich zum Befestigen von schweren Abdeckplatten oder Wandplatten an einer Gebäudeaussenwand. Ein in der Wand einbetoniertes Gehäuse weist ein Innengewinde auf, in welches ein Befestigungselement einschraubbar ist. Das Befestigungselement selbst weist einen Hohlraum auf, in welchem unverlierbar eine Mutter mit seitlichem Spiel gelagert ist. Die Befestigungsschraube wird durch eine Oeffnung an der Vorderseite des Befestigungselements eingeführt und in der Mutter festgeschraubt. Durch die seitliche Verschiebbarkeit der Mutter können kleinere Montagefehler ausgeglichen werden.

Die aus der US-PS 3,640,328 bekannte Vorrichtung ist zwar sowohl verankerbar als auch zerlegbar, zeichnet sich allerdings durch eine komplizierte Konstruktionsweise und eine mangelnde gelenkartige Beweglichkeit der die verankernde Schraube aufnehmenden Mutter aus.

Die aus der WO-A-92 08 019 bekannte Vorrichtung zur mechanischen Verbindung von zwei Gewindestangen besteht im wesentlichen aus einer rohrförmigen Hülse, in die beidseitig Abstützteile einschraubbar sind, wobei die Abstützteile zum leichteren Einschrauben jeweils eine Mutter aufweisen, die einteilig mit dem jeweiligen Abstützteil ausgebildet sind. Im Inneren der Hülse sind Aufnahmeteile zur Aufnahme der jeweiligen Gewindestange vorgesehen, wobei die Aufnahmeteile in ihrem Aussendurchmesser so bemessen sind, dass diese radial frei beweglich sind. Diese radial freie Beweglichkeit der Aufnahmeteile wird dazu ausgenutzt, um einen Versatz oder einen unterschiedlichen Winkel, der möglicherweise zwischen den beiden mechanisch zu koppelnden Gewindestangen besteht, auszugleichen. Hierfür können die Aufnahmeteile unterschiedlich ausgebildet sein, beispielsweise als zylindrischer Körper mit einer ebenen Grundfläche oder als kegelförmiger Körper mit einer schalenartigen Grundfläche, wobei die so ausgebildete Grundfläche auf einer entsprechend ausgebildeten Fläche des Abstützteils gleitet.

Vor der Verwendung der Vorrichtung zur mechanischen Kopplung der beiden Gewindestangen ist in einem ersten Schritt das Abstützteil in korrekter Lage auf die jeweiligen Gewindestangen aufzuschieben und in einem zweiten Schritt das Aufnahmeteil mit der jeweiligen Gewindestange zu verbinden. Danach können die Aufnahmeteile der jeweiligen Gewindestangen in die Hülse eingeschoben und die beiden Abstützteile mit der Hülse verschraubt werden.

Bei der Montage der Vorrichtung ist jedoch darauf zu achten, dass sich die beiden Enden der Gewindestange, die im montierten Zustand der Vorrichtung in der Hülse angeordnet sind, stets mit einer ausreichender Fläche untereinander berühren.

### Darstellung der Erfindung

Aufgabe der Erfindung ist es nun, eine Vorrichtung der eingangs genannten Art anzugeben, welche sich aus wenigen Teilen zusammensetzt und konstruktiv einfach ausgebildet ist. Die Vorrichtung sollte ohne grösseren Aufwand vollständig in die Einzelteile zerlegbar sein.

Gemäss der Erfindung besteht die Lösung darin, dass das Aufnahmeteil zwischen im Gehäuseinnenraum vorgesehenen rückseitigen, als Verdrehsicherung des Aufnahmeteils ausgebildeten Halterungsmitteln und einem von vorn einfüg- und zugfestfixierbaren Abstützteil gelenkartig beweglich und durch Entfernen des Abstützteils herausnehmbar gelagert ist.

Die erfindungsgemässe Vorrichtung lässt sich mit wenigen Handgriffen in ihre Einzelteile zerlegen. Bei Bedarf können somit einzelne Teile der verankerten Vorrichtung ausgewechselt werden. Es leuchtet ein, dass sich eine solche Vorrichtung auch einfacher herstellen lässt, als die aus dem Stand der Technik bekannten.

Vorzugsweise hat das Aufnahmeteil einen sphärisch gekrümmten Teil, der auf einer entsprechend konkav ausgenommmenen Stirnseite des Abstützteils gelagert ist. Das Abstützteil hält also das Aufnahmeteil nur auf einer Seite und umschliesst es nicht.

Die Halterungsmittel weisen vorzugsweise zwei Stifte auf, die in seitlichen Ausnehmungen des Aufnahmeteils mit Spiel eingreifen, derart, dass eine kugelgelenkartige Beweglichkeit und gleichzeitig eine Sicherung gegen Verdrehen das Aufnahmeteils gewährleistet sind. Die Stifte ragen z. B. senkrecht zur Gehäusemittelachse in den Gehäuseinnenraum hinein. Die Ausnehmungen sind in dem nicht sphärisch gekrümmten Teil des Aufnahmeteils ausgebildet und auf diesen beschränkt. Dadurch kann auch ein zu starkes Drehen des Aufnahmeteils um eine zur Gehäusemittelachse senkrechte Achse verhindert und die gelenkartige Beweglichkeit auf ein gewünschtes Mass beschränkt werden.

Das Aufnahmeteil weist eine zentrale Gewindebohrung zum Einschrauben des Konstruktionselements, z. B. einer Zugstange auf. Das Abstützteil seinerseits ist rohrförmig. Innendurchmesser und Länge desselben sind so aufeinander abgestimmt, dass für die Zugstange das gewünschte Mass an kugelgelenkartiger Beweglichkeit gegeben ist.

Bei einem Aufnahmeteil mit ausreichend grosser Wanddicke genügt die Stirnseite der Rohrwand zur Lagerung des Aufnahmeteils. Bei Bedarf können aber auch noch zusätzliche Abstützelemente im Rohrinneren vorgesehen sein.

Zur zugfesten Fixierung des Abstützteils weist das Gehäuse ein Innengewinde auf, in welches das Abstützteil einschraubbar ist. Anstelle einer Schraubverbindung kann z. B. auch ein bajonettartiger Verschluss treten.

Das Innengewinde des Gehäuses endet mit Vorteil in einen definierten Abstand zu den radial in den Gehäuseinnenraum hineinragenden Stiften, derart, dass das Aufnahmeteil nicht aus Versehen zwischen den Stiften und dem Abstützteil festgeklemmt werden kann.

Gemäss einer besonders bevorzugten Ausführungsform ist das Gehäuse rohrförmig und weist gleichmässig entlang des Umfangs verteilte, nach aussen gebogene Verankerungsbügel auf. Insbesondere ist das Gehäuse in der Art eines einseitig verschlossenen Rohres (Büchse) ausgebildet.

Das Aufnahmeteil braucht nicht unbedingt kugelgelenkartig beweglich gelagert zu sein. In einer vereinfachten Version kann es z. B. auch nur um eine Achse schwenkbar zwischen Abstützteil und Halterungsmittel festgehalten werden.

Vorzugsweise umfasst die Erfindung nur drei Einzelelemente. Keines dieser Einzelelemente weist für sich genommen bewegliche Teile auf. Die gelenkartige Beweglichkeit des Aufnahmeteils wird nur durch das aufeinander Gleiten von zwei geeignet geformten Flächen von jeweils auswechselbaren Elementen verwirklicht.

Aus der Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: einen Achsenlängsschnitt, durch eine in einem Tunnelgewölbe einbetonierte erfindungsgemässe Vorrichtung;

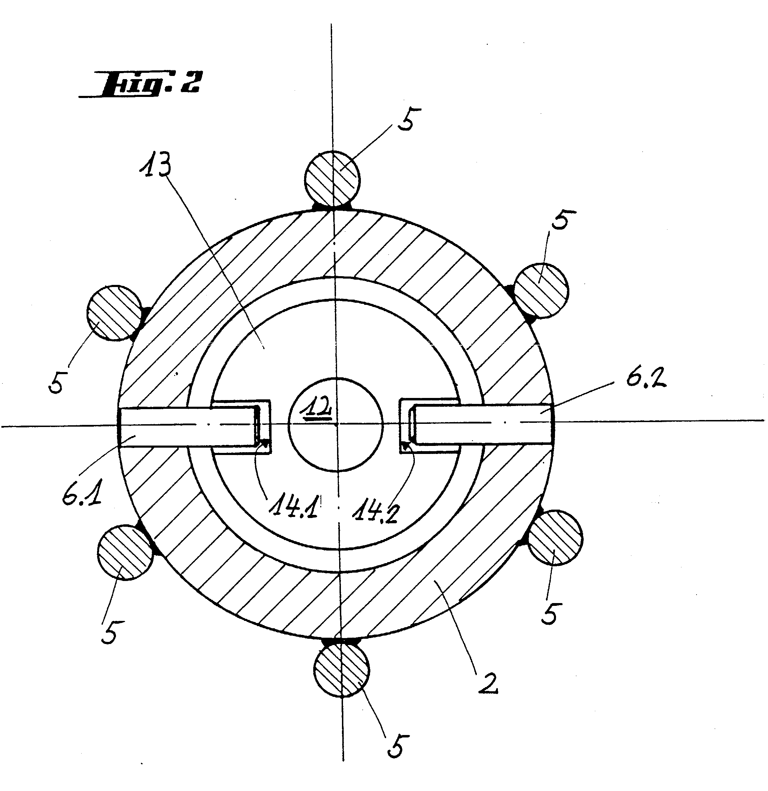

- Fig. 2: den in Fig. 1 dargestellten Achsenquerschnitt A-A.

Grundsätzlich sind in den Figuren entsprechende Teile mit gleichen Bezugszeichen versehen.

### Wege zur Ausführung der Erfindung

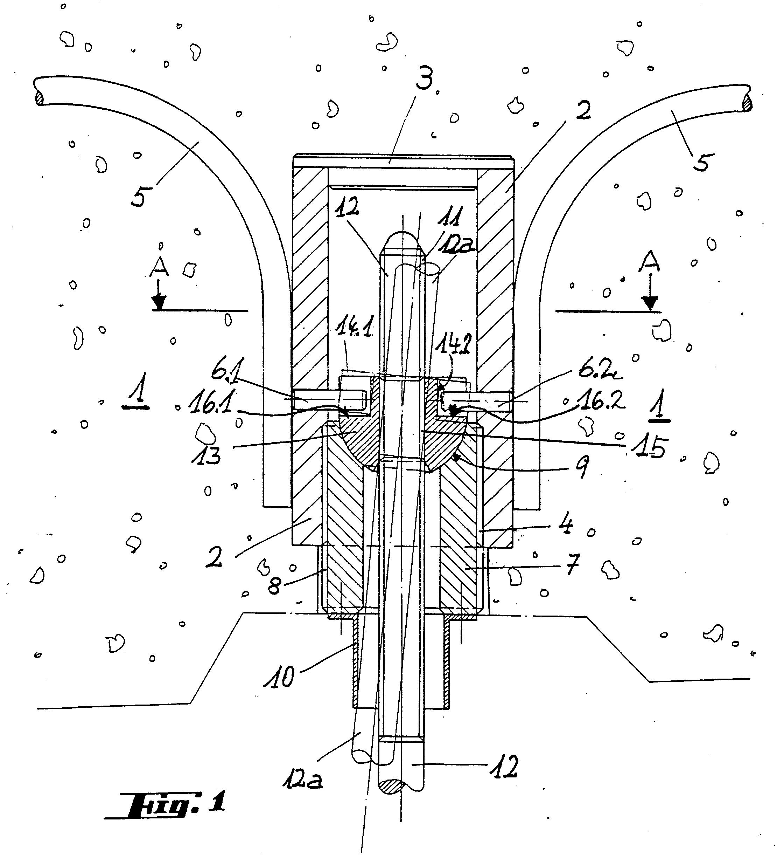

In Fig. 1 ist ein betoniertes Tunnelgewölbe 1 angedeutet, in das eine erfindungsgemässe Verankerungsvorrichtung einbetoniert ist. Diese weist gemäss einer bevorzugten Ausführungsform der Erfindung ein rohrförmiges Gehäuse 2 auf, das an seiner hinteren (in Fig. 1: oberen) Seite mit einem z. B. aufgesetzten Deckel 3 verschlossen ist. Das Gehäuse 2 ist nach vorne offen und weist ein Innengewinde 4 auf. Aussen am Gehäuse 2 ist eine Mehrzahl von nach aussen gebogenen Verankerungsbügeln 5 angebracht. Es handelt sich dabei z. B. um Rundeisen, die aussen am Gehäuse 2 angeschweisst sind. Ihre Aufgabe ist es, die auf die Verankerungsvorrichtung einwirkenden Kräfte möglichst grossflächig in den Beton des nelgewölbes 1 einzubringen.

In das Innengewinde 4 ist von vorne (in Fig. 1: von unten) ein Abstützteil 7 einführbar. Es handelt sich dabei vorzugsweise um ein dickwandiges Rohr mit einem Aussengewinde 8. An seiner in den Gehäuseinnenraum hineinragenden Stirnseite weist das Abstützteil 7 eine sphärisch konkav ausgebildete Ausnehmung 9 auf. An der gegenüberliegenden, aus dem Gehäuse 2 herausragendenen Stirnseite ist z. B. eine Abdeckhülse 10 befestigbar.

In der Ausnehmung 9 des Abstützteils 7 ist ein Aufnahmeteil 13 abgestützt. Es ist im wesentlichen halbkugelförmig ausgebildet und ruht mit einem Teil seiner sphärisch gekrümmten Fläche auf dem Abstützteil 7. Das Aufnahmeteil 13, weist eine zentrale Bohrung 15, mit Innengewinde auf. In dieses ist eine Zugstange 12 mit ihrem zumindest im Endbereich vorhandenen Gewinde 11 einschraubbar. Die Zugstange 12 lässt sich damit gegen Zugbelastung im Tunnelgewölbe verankern.

Um das Aufnahmeteil 13 einerseits nach hinten (in Fig. 1: nach oben) zu arretieren und andererseits gegen Verdrehen zu sichern, ist eine Stift-Nut-Sicherung vorgesehen. Im Gehäuse 2 sind zu diesem Zweck z. B. zwei, einander diametral gegenüberliegend angeordnete, radial in den Gehäuseinnenraum hineinragende Stifte 6.1, 6.2 vorgesehen. Sie werden z. B. in entsprechende Bohrungen des Gehäuses 2 von aussen eingesetzt. Das Aufnahmeteil 13 weist an entsprechenden Stellen Ausnehmungen 14.1, 14.2 auf.

Die beiden Stifte 6.1, 6.2 liegen auf einer gemeinsamen geometrischen Achse, die die Längsachse des Gehäuses 2 in einem Punkt vorzugsweise rechtwinklig schneidet. Der genannte Schnittpunkt stellt das Zentrum der kugelgelenkartigen Beweglichkeit des Aufnahmeteils 13 dar. Damit eine Schwenkung um eine zu den beiden erwähnten geometrischen Achsen (Längsmittelachse des Gehäuses 2 und geometrische Achse der Stifte 6.1, 6.2) senkrechte Achse möglich ist, sind die Ausnehmungen 14.1, 14.2 in der Art eines Randeinstichs ausgebildet, d. h. sie dringen von der Schnittebene der Halbkugel her nur bis zu einer bestimmten Tiefe in Richtung des sphärisch gekrümmten Teils ein. Es entsteht dadurch eine Art Stufe (Seitenwand 16.1, 16.2), die die Schwenkbewegung um die zu den Stiften 6.1, 6.2 senkrechte geometrische Achse beschränkt.

Dies ist in Fig. 1 dargestellt. Wenn die Zugstange 12 in die Position 12a gebracht wird, bietet der Stift 6.1 der Seitenwand 16.1 einen Anschlag. Es ist darauf hinzuweisen, dass der Innendurchmesser des Abstützteils 7 genügend gross ist, um diese Position 12a zuzulassen.

Wie bereits angedeutet verhindert der Stift-Nut-Angriff ein Verdrehen des Aufnahmeteils 13, wenn die Zugstange 12 vorgespannt wird. Es ist also auch möglich die Zugstange in die fertig zusammengesetzte Vorrichtung ein- bzw. auszuschrauben.

Schliesslich verhindern die Stifte 6.1, 6.2 auch, dass das Aufnahmeteil 13 nach hinten aus der Ausnehmung 9 des Abstützteils 7 hinausgeschoben werden kann (z. B. beim Einführen einer Zugstange) oder bei der Anwendung in einer anderen Gebrauchslage herausfallen kann.

Bei der erfindungsgemässen Vorrichtung kann die Zugstange 12 sehr einfach in das im Tunnelgewölbe 1 einbetonierte Gehäuse 2 eingesetzt werden. Es wird zunächst das Abstützteil 7 über das Ende der Zugstange 12 geschoben (der freie Innenquerschnitt des Abstützteils 7 ist um einiges grösser als der Durchmesser der Zugstange 12), dann das Aufnahmeteil 13 auf das Gewinde 11 der Zugstange 12 aufgeschraubt und schliesslich das Aufnahmeteil 7 in das Innengewinde 4 des Gehäuses 2 eingeschraubt. Beim Einschrauben des Abstützteils 7 ist darauf zu achten, dass das Aufnahmeteil 13 nicht zwischen den Stiften 6.1, 6.2 und dem Abstützteil 7 festgeklemmt wird. Gemäss einer bevorzugten Ausführungsform endet deshalb das Innengewinde 4 in einem gewissen, die nötige Beweglichkeit des Aufnahmeteils 13 zulassendenen Abstand vor den Stiften 6.1, 6.2. In diesem Fall kann das Abstützteil 7 stets bis zum Anschlag (Ende des Innengewindes 4) eingeschraubt werden, wobei dann nicht nur die gelenkartige Beweglichkeit sondern auch die Arretierung des Aufnahmeteils 13 nach hinten gegeben ist.

Durch die erfindungsgemässe Vorrichtung ist sichergestellt, dass jede durch eine Belastung der Zugstange 12 sich ergebende Zugkraft über das Aufnahmeteil 13, das Abstützteil 7, das Gehäuse 2 und die Verankerungsbügel 5 auf das Tunnelgewölbe 1 übertragen wird. Eine Verbiegung der Zugstange 12, zumindest in ihrem an ihre obere Verankerung anschliessenden Bereich, tritt auch dann nicht auf, wenn die Zugkraft nicht parallel zur Längsachse des Gehäuses 2 wirkt.

Die erfindungsgemässe Vorrichtung zeichnet sich dadurch aus, dass sie zwecks Wartung und Ueberprüfung ihrer Elemente resp. der Zugstange ohne grossen Aufwand zerlegt werden kann.

Die Erfindung beschränkt sich natürlich nicht auf die beschriebene Ausführungsform. So ist es z. B. nicht zwingend, dass die Drehsicherung und die Bewegungsbegrenzung resp. Halterung mit denselben Mitteln bewirkt werden. Für die Verdrehsicherung genügt im Prinzip auch eine einzige Stift-Nut Nut-Anordnung, eine abgeflachte seitliche Stelle des Aufnahmeteils, ein eckiger Flansch am Aufnahmeteil oder dergleichen. Als Arretierung nach hinten kann z. B. auch ein plattenförmiger Einsatz im Gehäuse 2 dienen, welcher im geringen Abstand über dem Aufnahmeteil im Gehäuseinnenraum angeordnet ist. Durch eine zentrale Oeffnung des Einsatzes kann die Stange 12 hindurch ragen. Der erwähnte Einsatz kann statt mit der flachen Seite des halbkugelförmigen Aufnahmeteils auch mit einem an diesem angebrachten Flansch zusammenwirken.

Das Aufnahmeteil braucht nicht halbkugelförmig ausgebildet zu sein. Es kann auch als Vollkugel oder als Kugelabschnitt ausgebildet sein.

Anstelle von zwei Stiften können auch mehr vorgesehen sein. Insbesondere kann die erfindungsgemässe Stift-Nut-Arretierung auch mit vier, auf zwei senkrecht zueinander stehenden geometrischen Achsen angeordneten Stiften verwirklicht werden. Es versteht sich, dass das Spiel der Stift-Nut-Arretierungen genügend gross sein muss.

Zusammenfassend kann festgestellt werden, dass durch die Erfindung eine Verankerungsvorrichtung für auf Zug belastete Konstruktionselemente, wie Zugstangen, Seile etc. geschaffen worden ist, die auch nicht axiale Zugkräfte sauber aufnehmen kann und sehr wartungsfreundlich ist.

## Patentansprüche

1. Vorrichtung zum Verankern eines auf Zug belasteten Konstruktionselements, umfassend ein verankerbares, insbesondere einbetonierbares Gehäuse (2) und ein in diesem gelenkartig beweglich gelagertes Aufnahmeteil (13), in welchem das Konstruktionselement (12) zugfest fixierbar ist, dadurch gekennzeichnet, dass das Aufnahmeteil (13) zwischen im Gehäuseinnenraum vorgesehenen rückseitigen, als Verdrehsicherung des Aufnahmeteils (13) ausgebildeten Halterungsmitteln (6.1, 6.1), und einem von vorn lösbar einfüg- und zugfest fixierbaren Abstützteil (7) gelenkartig beweglich und durch Entfernen des Abstützteils (7) herausnehmbar gelagert ist.

2. Vorrichtung nach Anspruch 1, dadurch gekennzeichnet, dass das Aufnahmeteil (13) einen sphärisch gekrümmten Teil hat, der auf einer entsprechend konkav ausgenommenen Stirnseite (9) des Abstützteils (7) gelagert ist.

3. Vorrichtung nach Anspruch 1 oder 2, dadurch gekennzeichnet, dass die rückseitigen Halterungsmittel Stifte (6.1, 6.2) umfassen, die in seitliche Ausnehmungen (14.1, 14.2) des Aufnahmeteils (13) mit Spiel eingreifen, derart, dass gleichzeitig eine begrenzte Beweglichkeit und eine Sicherung gegen Verdrehen des Aufnahmeteils (13) gewährleistet sind.

4. Vorrichtung nach einem der Ansprüche 1-3, dadurch gekennzeichnet, dass das Aufnahmeteil (13) eine zentrale Gewindebohrung (15) zum Einschrauben des Konstruktionselementes (12) aufweist und dass das Abstützteil (7) im wesentlichen rohrförmig ist.

5. Vorrichtung nach einem der Ansprüche 1-4, dadurch gekennzeichnet, dass das Gehäuse (2) ein Innengewinde (4) hat, in welches das Abstützteil (7) von vorne einschraubbar ist.

6. Vorrichtung nach Anspruch 5, dadurch gekennzeichnet, dass das Innengewinde (4) des Gehäuses (2) in einem Abstand zu den Halterungsmitteln (6.1, 6.2) endet, derart, dass das Aufnahmeteil (13) nicht zwischen Halterungsmitteln (6.1, 6.2) und Abstützteil (7) festgeklemmt werden kann.

7. Vorrichtung nach einem der Ansprüche 1-6, dadurch gekennzeichnet, dass das Gehäuse (2) rohrförmig ist und mit aussenherum gleichmässig angeordneten Verankerungsbügeln (5) versehen ist.

8. Verwendung der Vorrichtung nach Anspruch 1 zur Verankerung einer Zugstange (12), insbesondere in einem Tunnelgewölbe (1).

## Claims

1. Device for anchoring a construction element which is under tension, said device comprising a housing (2) which can be anchored, in particular set in concrete, and a holding part (13) which is mounted in the housing (2) so as to be movable in hinged manner and in which the construction element (12) can be secured in tension-resistant manner, characterised in that the holding part (13) is mounted such that it can be withdrawn by removal of a support part (7) and is movable in hinged manner between rear holding means (6.1, 6.2) which are provided in the housing interior and take the form of a device for securing the holding part (13) against pivoting and the support part (7) which can be inserted from the front and detachably secured in tension-resistant manner.

2. Device according to Claim 1, characterised in that the holding part (13) has a spherically curved portion which is mounted on an end face (9), of the support part (7), which is recessed in a correspondingly concave manner.

3. Device according to Claims 1 or 2, characterised in that the rear holding means comprise pins (6.1, 6.2) which engage with play in lateral recesses (14.1, 14.2) in the holding part (13) such that limited movability and securing against pivoting of the holding part (13) are ensured simultaneously.

4. Device according to any one of Claims 1 to 3, characterised in that the holding part (13) has a central threaded bore (15) for screwing in the construction element (12); and in that the support part (7) is substantially tubular.

5. Device according to any one of Claims 1 to 4, characterised in that the housing (2) comprises an internal thread (4) into which the support part (7) can be screwed from the front.

6. Device according to Claim 5, characterised in that the internal thread (4) of the housing (2) terminates at a spacing from the holding means (6.1, 6.2) such that the holding part (13) cannot be wedged between the holding means (6.1, 6.2) and the support part (7).

7. Device according to any one of Claims 1 to 6, characterised in that the housing (2) is tubular and is provided with anchorage bars (5) disposed uniformly around the exterior.

8. Use of the device according to Claim 1 for anchoring a tie rod (12), in particular in a tunnel vault (1).

## Revendications

1. Dispositif d'ancrage d'un élément de construction sollicité en traction, comprenant un corps (2) apte à être ancré, en particulier noyé dans le béton, et une pièce de positionnement (13) placée dans celui-ci à la manière d'une articulation mobile, dans laquelle l'élément de construction (12) peut être fixé de façon résistant à la traction, caractérisé en ce que la pièce (13) est supportée entre des moyens d'appui (6.1, 6.2) prévus à l'arrière dans l'espace intérieur du corps et constituant une protection contre, la torsion de cette pièce (13) et une butée (7) à fixer de façon résistant à l'enfoncement et à la traction, démontable par l'avant, à la manière d'une articulation mobile, de façon à pouvoir retirer la pièce par enlèvement de la butée (7).

2. Dispositif suivant la revendication 1, caractérisé en ce que la pièce de positionnement (13) comporte une partie à courbure sphérique, supportée sur une face d'extrémité (9) de la butée (7), évidée avec une concavité correspondante.

3. Dispositif suivant la revendication 1 ou 2, caractérisé en ce que les moyens d'appui à l'arrière comportent des broches (6,1, 6.2), qui sont engagées avec jeu dans des cavités latérales (14.1, 14.2) de la pièce (13), de façon à garantir en même temps une mobilité limitée et une protection contre la torsion de cette pièce (13).

4. Dispositif suivant l'une quelconque des revendications 1 - 3, caractérisé en ce que la pièce de logement (13) présente un trou central fileté (15) pour y visser l'élément de construction (12), et en ce que la butée (7) est essentiellement en forme de tube.

5. Dispositif suivant l'une quelconque des revendications 1 - 4, caractérisé en ce que le corps (2) présente un filetage intérieur (4), dans lequel la butée (7) peut être vissée par l'avant.

6. Dispositif suivant la revendication 5, caractérisé en ce que le filetage intérieur (4) du corps (2) se termine à une distance des moyens d'appui (6.1, 6.2) telle que la pièce de positionnement (13) ne puisse pas se coincer entre ces moyens (6,1, 6.2) et la butée (7).

7. Dispositif suivant l'une quelconque des revendications 1 - 6, caractérisé en ce que le corps (2) est en forme de tube et est pourvu d'étriers d'ancrage (5), disposés régulièrement à sa périphérie extérieure.

8. Utilisation du dispositif suivant la revendication 1 pour l'ancrage d'une barre de traction (12), en particulier dans une voûte de tunnel (1).
